# EUROPÄISCHE PATENTSCHRIFT

(11) **EP 3 688 412 B1**
(45) Veröffentlichungstag und Bekanntmachung des Hinweises auf die Patenterteilung: **17.04.2024**
(21) Anmeldenummer: 18769332.0
(22) Anmeldetag: 11.09.2018
(51) Int. Cl.: G01C 21/30, G01C 11/30

(54) **VERFAHREN UND VORRICHTUNG ZUM BESTIMMEN EINER HOCHGENAUEN POSITION UND ZUM BETREIBEN EINES AUTOMATISIERTEN FAHRZEUGS**
METHOD AND DEVICE FOR DETERMINING A HIGH-PRECISION POSITION AND FOR OPERATING AN AUTOMATED VEHICLE
PROCÉDÉ ET DISPOSITIF POUR DETERMINER UNE POSITION DE HAUTE PRECISION ET POUR FAIRE FONCTIONNER UN VÉHICULE AUTOMATIQUE

(30) Priorität: 25.09.2017 DE 102017216954
(43) Veröffentlichungstag der Anmeldung: 05.08.2020
(73) Patentinhaber: Robert Bosch GmbH, 70442 Stuttgart (DE)
(72) Erfinder: ROHDE, Jan, 70192 Stuttgart (DE); ZAUM, Daniel, 31157 Sarstedt (DE); MIELENZ, Holger, 73760 Ostfildern (DE)
(86) Internationale Anmeldenummer: PCT/EP2018/074459
(87) Internationale Veröffentlichungsnummer: WO 2019/057553

(56) Entgegenhaltungen:
- WO-A1-2014/166532
- DE-B3-102014 002 150
- US-A1- 2010 235 096
- US-B1- 9 689 682

## Beschreibung

Die vorliegende Erfindung betrifft ein Verfahren sowie eine Vorrichtung zum Bestimmen einer hochgenauen Position und zum Betreiben eines automatisierten Fahrzeugs mit einem Schritt des Erfassens von Umgebungsdatenwerten, wobei die Umgebungsdatenwerte eine Umgebung des automatisierten Fahrzeugs repräsentieren, wobei die Umgebung wenigstens zwei Umgebungsmerkmale umfasst, einem Schritt des Bestimmens eines Musters, abhängig von den wenigstens zwei Umgebungsmerkmalen, einem Schritt des Einlesens von Kartendatenwerten, wobei die Kartendatenwerte eine Karte repräsentieren, wobei die Karte wenigstens die Umgebung des automatisierten Fahrzeugs repräsentiert, wobei die Karte ein Referenzmuster umfasst, einem Schritt des Bestimmens der hochgenauen Position des automatisierten Fahrzeugs, ausgehend von einem Abgleich des Musters mit dem Referenzmuster, und einem Schritt des Betreibens des automatisierten Fahrzeugs, abhängig von der hochgenauen Position. WO 2014/166532 A1 offenbart die Bestimmung einer Fahrzeugposition basierend auf den Beleuchtungsdaten von Straßenlaternen. US 9 689 682 B2 offenbart die Bestimmung einer Fahrzeugposition basierend auf dem Streulicht von definierten Lichtquellen.

### Offenbarung der Erfindung

Das erfindungsgemäße Verfahren zum Bestimmen einer hochgenauen Position und zum Betreiben eines automatisierten Fahrzeugs umfasst einen Schritt des Erfassens von Umgebungsdatenwerten, wobei die Umgebungsdatenwerte eine Umgebung des automatisierten Fahrzeugs repräsentieren, wobei die Umgebung wenigstens zwei Umgebungsmerkmale umfasst, und einen Schritt des Bestimmens eines Musters, abhängig von den wenigstens zwei Umgebungsmerkmalen. Das Verfahren umfasst weiterhin einen Schritt des Einlesens von Kartendatenwerten, wobei die Kartendatenwerte eine Karte repräsentieren, wobei die Karte wenigstens die Umgebung des automatisierten Fahrzeugs repräsentiert, wobei die Karte ein Referenzmuster umfasst, einen Schritt des Bestimmens der hochgenauen Position des automatisierten Fahrzeugs, ausgehend von einem Abgleich des Musters mit dem Referenzmuster, und einen Schritt des Betreibens des automatisierten Fahrzeugs, abhängig von der hochgenauen Position.

Unter einem automatisierten Fahrzeug ist ein teil-, hoch- oder vollautomatisiertes Fahrzeug zu verstehen.

Unter einem Betreiben des automatisierten Fahrzeugs ist zu verstehen, dass das automatisierte Fahrzeug teil-, hoch- oder vollautomatisiert betrieben wird. Dabei umfasst das Betreiben erfindungsgemäß das Bestimmen einer Trajektorie für das automatisierte Fahrzeug und/oder das Abfahren der Trajektorie mittels einer automatisierten Quer- und/oder Längssteuerung und optional das Ausführen sicherheitsrelevanter Fahrfunktionen etc.

Unter einer hochgenauen Position ist eine Position zu verstehen, welche innerhalb eines vorgegebenen Koordinatensystems, beispielsweise GNSS-Koordinaten, derart genau ist, dass diese Position eine maximal zulässige Unschärfe nicht überschreitet. Dabei kann die maximale Unschärfe beispielsweise von der Umgebung des automatisierten Fahrzeugs abhängen. Weiterhin kann die maximale Unschärfe beispielsweise davon abhängen, ob das automatisierte Fahrzeug teil-, hoch- oder vollautomatisiert betrieben wird. Grundsätzlich ist die maximale Unschärfe so gering, dass ein sicheres Betreiben des automatisierten Fahrzeugs gewährleistet ist. Für ein vollautomatisiertes Betreiben des automatisierten Fahrzeugs liegt die maximale Unschärfe beispielsweise in einer Größenordnung von etwa 10 Zentimeter.

Unter einer Karte ist beispielsweise eine digitale Karte zu verstehen, welche dazu ausgebildet ist, beispielsweise in Verbindung mit einem Navigationssystem und/oder einem Steuergerät des automatisierten Fahrzeugs und/oder in Verbindung mit einem Smartphone, welches mit dem automatisierten Fahrzeug verbunden bzw. von diesem umfasst wird, eine hochgenaue Position des automatisierten Fahrzeugs zu bestimmen und/oder eine Funktion, abhängig von der hochgenauen Position, auszuführen, etc. In einer Ausführungsform sind unter einer Karte Datenwerte zu verstehen, welche Referenzmuster in Verbindung mit deren Positionen repräsentieren.

Unter einer Umgebung des automatisierten Fahrzeugs ist beispielsweise ein Bereich zu verstehen, welcher mittels einer Umfeldsensorik des automatisierten Fahrzeugs erfasst werden kann Unter der Umfeldsensorik sind beispielsweise wenigstens ein Video- und/oder wenigstens ein Radar- und/oder wenigstens ein Lidar- und/oder wenigstens ein Ultraschall- und/oder wenigstens ein weiterer Sensor zu verstehen, welcher dazu ausgebildet ist, die Umgebung des automatisierten Fahrzeugs in Form von Umgebungsdatenwerten zu erfassen.

Das erfindungsgemäße Verfahren löst auf vorteilhafte Weise das Problem, dass ein sicheres und zuverlässiges Betreiben eines automatisierten Fahrzeugs in vielen Fällen von der Kenntnis einer hochgenauen Position des automatisierten Fahrzeugs abhängt. Das hier beschriebene Verfahren unterstützt das Bestimmen der hochgenauen Position insbesondere mittels Muster, welche leicht und schnell erfasst und aus den Umgebungsdatenwerten heraus bestimmt werden können.

Erfindungsgemäß sind die wenigstens zwei Umgebungsmerkmale als Lichtquellen ausgebildet. Dabei wird das Muster bestimmt, indem ein Farbverlauf und/oder ein Helligkeitsverlauf der wenigstens zwei Umgebungsmerkmale bestimmt werden.

Unter einer Lichtquelle sind beispielsweise eine Straßenlaterne und/oder eine Leuchtreklame und/oder eine Lichtsignalanlage und/oder ein Fenster eines beleuchteten Raums eines Gebäudes, insbesondere ein Schaufenster, und/oder weitere Lichtquellen zu verstehen.

Unter einem Muster ist beispielsweise ein charakteristischer Farb- und/oder Helligkeitsverlauf zu verstehen, welcher sich beispielsweise ergibt, indem die Umgebungsdatenwerte mittels einer Umfeldsensorik des automatisierten Fahrzeugs in Form eines Bildes dargestellt und/oder mittels einer geeigneten Software ausgewertet werden.

Unter einem Referenzmuster ist beispielsweise ein Muster zu verstehen, welches vorab erfasst und in Verbindung mit einer Positionsangabe in der Karte hinterlegt ist.

Hierin zeigt sich der Vorteil, dass gerade in urbanen Räumen, welche eine hohe Dichte von Lichtquellen aufweisen, eine hochgenaue Position mittels ohnehin vorhandenen Umgebungsmerkmalen bestimmt werden kann, indem die vorhandenen Lichtquellen einbezogen werden. Da einerseits viele der Lichtquellen (Straßenlaternen, Leuchtreklamen, etc.) oft in einer Höhe angebracht sind, die größer als die durchschnittliche Höhe eines Fahrzeugs ist, und andererseits die Lichtquellen zu jeder Tageszeit erfasst werden können, ist auch bei hohem Verkehrsaufkommen und/oder bei einer dunklen Umgebung gewährleistet, dass die Lichtquellen mittels der Umfeldsensorik erfasst werden können. Dies macht das Verfahren besonders robust und erhöht die Sicherheit beim Betreiben des automatisierten Fahrzeugs.

Erfindungsgemäß umfasst die Karte das Referenzmuster, abhängig von einer Tageszeit und/oder abhängig von einer Jahreszeit und/oder abhängig von einer Witterung.

Da viele Umgebungsmerkmale, insbesondere Lichtquellen, bei unterschiedlichen Tageszeiten (beispielsweise bezogen auf Tag und Nacht bezüglich der Umgebungshelligkeit) und/oder unterschiedlichen Jahreszeiten (beispielsweise bezogen auf unterschiedliche Sonnenstände und/oder unterschiedlichen Uhrzeiten an denen es hell oder dunkel wird) und/oder unterschiedlichen Witterungen (Nebel, Sonnenschein, Regen Schneefall, etc.) bei einem Erfassen mittels einer Umfeldsensorik unterschiedliche Farb- und/oder Helligkeitsverläufe aufweisen, werden diese Unterschiede erfindungsgemäß berücksichtigt. Dies macht das Verfahren robust gegenüber unterschiedlichen äußeren Bedingungen und erhöht somit die Sicherheit beim Betreiben des automatisierten Fahrzeugs.

Vorzugsweise werden die Kartendatenwerte eingelesen, indem die Kartendatenwerte von einem externen Server empfangen werden.

Unter einem externen Server ist beispielsweise ein Kartenanbieter zu verstehen. Dies ermöglicht vorteilhafterweise, dass die Karte, insbesondere bezüglich der Tageszeit und/oder der Jahreszeit und/oder der Witterung, und/oder bezüglich beispielsweise baulichen Änderungen, die zu Änderungen eines Musters bzw. Referenzmusters führen, hochaktuell erstellt und somit dem automatisierten Fahrzeug bereitgestellt werden kann.

Die erfindungsgemäße Vorrichtung zum Bestimmen einer hochgenauen Position und zum Betreiben eines automatisierten Fahrzeugs umfasst erste Mittel zum Erfassen von Umgebungsdatenwerten, wobei die Umgebungsdatenwerte eine Umgebung des automatisierten Fahrzeugs repräsentieren, wobei die Umgebung wenigstens zwei Umgebungsmerkmale umfasst, und zweite Mittel zum Bestimmen eines Musters, abhängig von den wenigstens zwei Umgebungsmerkmalen. Die Vorrichtung umfasst weiterhin dritte Mittel zum Einlesen von Kartendatenwerten, wobei die Kartendatenwerte eine Karte repräsentieren, wobei die Karte wenigstens die Umgebung des automatisierten Fahrzeugs repräsentiert, wobei die Karte ein Referenzmuster umfasst, vierte Mittel zum Bestimmen der hochgenauen Position des automatisierten Fahrzeugs, ausgehend von einem Abgleich des Musters mit dem Referenzmuster, und fünfte Mittel zum Betreiben des automatisierten Fahrzeugs, abhängig von der hochgenauen Position.

Vorzugsweise sind die ersten Mittel und/oder die zweiten Mittel und/oder die dritten Mittel und/oder die vierten Mittel und/oder die fünften Mittel dazu ausgebildet, ein Verfahren gemäß wenigstens einem der Verfahrensansprüche auszuführen.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:
Figur 1 ein Ausführungsbeispiel der erfindungsgemäßen Vorrichtung;
Figur 2 ein Ausführungsbeispiel des erfindungsgemäßen Verfahrens; und
Figur 3 ein Ausführungsbeispiel des erfindungsgemäßen Verfahrens in Form einen Ablaufdiagramms.

### Ausführungsformen der Erfindung

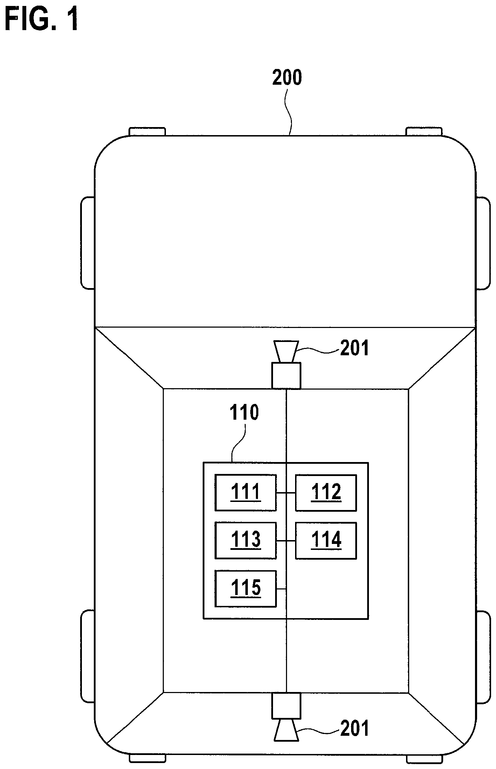

Figur 1 zeigt ein automatisiertes Fahrzeug 200, welches die erfindungsgemäße Vorrichtung 110 zum Bestimmen 340 einer hochgenauen Position 210 und zum Betreiben 350 eines automatisierten Fahrzeugs 200 umfasst.

Die Vorrichtung 110 umfasst erste Mittel 111 zum Erfassen 310 von Umgebungsdatenwerten, wobei die Umgebungsdatenwerte eine Umgebung 220 des automatisierten Fahrzeugs 200 repräsentieren, wobei die Umgebung 220 wenigstens zwei Umgebungsmerkmale 221, 222 umfasst, und zweite Mittel 112 zum Bestimmen 320 eines Musters, abhängig von den wenigstens zwei Umgebungsmerkmalen 221, 222. Die Vorrichtung umfasst weiterhin dritte Mittel 113 zum Einlesen 330 von Kartendatenwerten, wobei die Kartendatenwerte eine Karte repräsentieren, wobei die Karte wenigstens die Umgebung 220 des automatisierten Fahrzeugs 200 repräsentiert, wobei die Karte ein Referenzmuster umfasst, vierte Mittel 114 zum Bestimmen 340 der hochgenauen Position 210 des automatisierten Fahrzeugs 200, ausgehend von einem Abgleich des Musters mit dem Referenzmuster, und fünfte Mittel 115 zum Betreiben 350 des automatisierten Fahrzeugs 200, abhängig von der hochgenauen Position 210.

Die ersten Mittel 111 zum Erfassen 310 von Umgebungsdatenwerten sind beispielsweise derart als Umfelderfassungssystem ausgebildet, dass sie eine eigene Umfeldsensorik umfassen oder mit einer bereits von dem automatisierten Fahrzeug 200 umfassten Umfeldsensorik 201 verbunden sind. Weiterhin umfassen die ersten Mittel beispielsweise eine Recheneinheit (Prozessor, Arbeitsspeicher, Festplatte, Software), welche die Umgebungsdatenwerte - beispielsweise mittels Verfahren der Objektklassifikation, etc. - verarbeitet und auswertet. Weiterhin sind die ersten Mittel 111 dazu ausgebildet, die Umgebungsdatenwerte an die zweiten Mittel 112 weiterzuleiten. In einer Ausführungsform sind die ersten Mittel 111 dazu ausgebildet, die Umgebungsdatenwerte ohne Auswertung und/oder mit einer Veränderung des Datenformats an die zweiten Mittel 112 weiterzuleiten.

Die zweiten Mittel 112 zum Bestimmen 320 eines Musters, abhängig von den wenigstens zwei Umgebungsmerkmalen 221, 222, sind beispielsweise als eine Recheneinheit (Prozessor, Arbeitsspeicher, Festplatte, Software) ausgebildet. Dabei ist die Software dazu ausgebildet, in den Umgebungsdatenwerten, welche beispielsweise von den ersten Mittel 111 in Form eines digitalen Bildes übertragen werden, Muster - insbesondere mittels eines Farbverlaufs und/oder eines Helligkeitsverlaufs der wenigstens zwei Umgebungsmerkmale 221, 222, zu bestimmen. Beispielsweise wird ein Muster bestimmt, indem geometrische Objekte (Kreise, Geraden, sternenförmige Objekte, Anordnung von Punkten, etc.) bestimmt werden. In einer Ausführungsform werden die Muster abhängig von der Umfeldsensorik 201 des automatisierten Fahrzeugs 200 bestimmt, da abhängig von der unterschiedlichen Sensorik beispielsweise dieselben wenigstens zwei Umgebungsmerkmale 221, 222 unterschiedlichen Muster erzeugen. Weiterhin sind die zweiten Mittel 112 dazu ausgebildet, das Muster an die vierten Mittel 114 weiterzuleiten.

Die dritten Mittel 113 zum Einlesen 330 von Kartendatenwerten sind beispielsweise als Datenschnittstelle ausgebildet, die ein Speichermedium zum Speichern der Kartendatenwerte und eine Schnittstelle zum Übertragen der Kartendatenwerte an die vierten Mittel 114 umfasst. In einer weiteren Ausführungsform sind die vierten Mittel 114 dazu ausgebildet, die Kartendatenwerte einzulesen und an die vierten Mittel 114 zu übertragen, indem die Kartendatenwerte von einem externen Server 230 empfangen werden, Dazu sind die die dritten Mittel 113 beispielsweise Sende- und/oder Empfangseinheit ausgebildet. In einer weiteren Ausführungsform sind die dritten Mittel 113 derart ausgebildet, dass sie mit einer bereits von dem Fahrzeug umfassten Sende- und/oder Empfangseinheit - insbesondere einem Smartphone - verbunden sind. Weiterhin sind die dritten Mittel 113 dazu ausgebildet, die Kartendatenwerte an die vierten Mittel 114 weiterzuleiten.

Die vierten Mittel 114 zum Bestimmen 340 der hochgenauen Position 210, ausgehend von einem Abgleich des Musters mit dem Referenzmuster, sind beispielsweise als Steuergerät und/oder Recheneinheit ausgebildet, welche beispielsweis einen Prozessor, Arbeitsspeicher und eine Festplatte sowie eine geeignete Software zum Bestimmen 340 einer hochgenauen Position 210 des automatisierten Fahrzeugs 200 umfassen.

Die fünften Mittel 115 zum Betreiben 350 des automatisierten Fahrzeugs 200, abhängig von der hochgenauen Position 210, sind beispielsweise als Steuergerät ausgebildet.

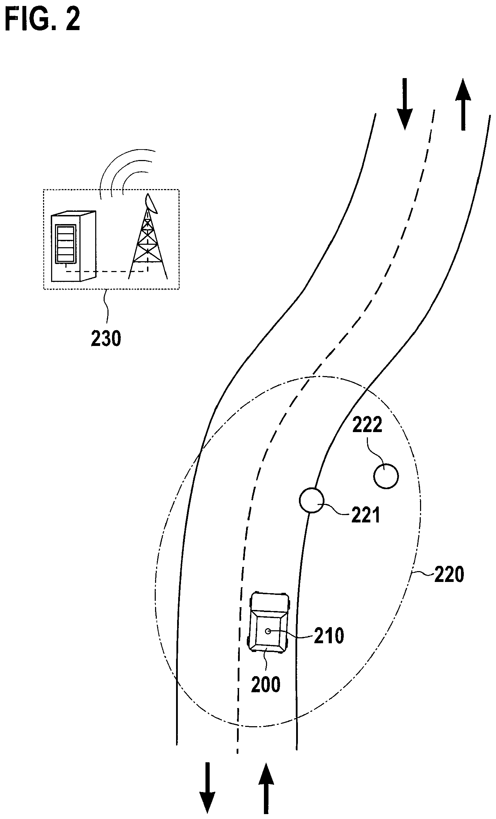

Figur 2 zeigt ein Ausführungsbeispiel des Verfahrens 300 zum Bestimmen 340 einer hochgenauen Position 210 und zum Betreiben 350 eines automatisierten Fahrzeugs 200.

Dabei befindet sich das automatisierte Fahrzeug 200 auf einer zweispurigen Straße mit einer Fahrspur pro Fahrtrichtung. Mittels der Vorrichtung 110 zum Bestimmen 340 der hochgenauen Position 210 und zum Betreiben 350 des automatisierten Fahrzeugs 200 werden Umgebungsdatenwerte erfasst, wobei die Umgebungsdatenwerte eine Umgebung 220 des automatisierten Fahrzeugs 200 repräsentieren, wobei die Umgebung 220 wenigstens zwei Umgebungsmerkmale 221, 222 umfasst. Abhängig von den wenigstens zwei Umgebungsmerkmalen 221, 222, welche beispielsweise als Lichtquellen ausgebildet sind, wird ein Muster bestimmt. Beispielsweise wird das Muster bestimmt, indem ein Farbverlauf und/oder ein Helligkeitsverlauf der wenigstens zwei Umgebungsmerkmale 221, 222 bestimmt werden. Weiterhin werden Kartendatenwerte eingelesen, beispielsweise von einem Speichermedium und/oder indem die Kartendatenwerte von einem externen Server 230 empfangen werden. Dabei repräsentieren die Kartendatenwerte eine Karte, wobei die Karte wenigstens die Umgebung 220 des automatisierten Fahrzeugs 200 repräsentiert, wobei die Karte ein Referenzmuster umfasst. Anschließend wird ausgehend von einem Abgleich des Musters mit dem Referenzmuster die hochgenaue Position 210 des automatisierten Fahrzeugs 200 bestimmt.

Die hochgenaue Position 210 wird erfindungsgemäß bestimmt, indem bestimmte Größen (Längen, Winkel, Radien, etc.) die das Muster aufweist, mit vergleichbaren Größen des Referenzmusters verglichen werden. Beispielsweise kann aufgrund einer Größe und/oder einer Orientierung des Musters im Vergleich zu dem Referenzmuster ein Abstand und/oder eine Orientierung des automatisierten Fahrzeugs 200, beispielsweise ausgehend von wenigstens einer Position der wenigstens zwei Umgebungsmerkmale 221, 222, bestimmt und so letztendlich die hochgenaue Position 210 - mittels Vektoraddition - bestimmt werden.

Anschließend wird das automatisierte Fahrzeug 200 abhängig von der hochgenauen Position 210 betrieben.

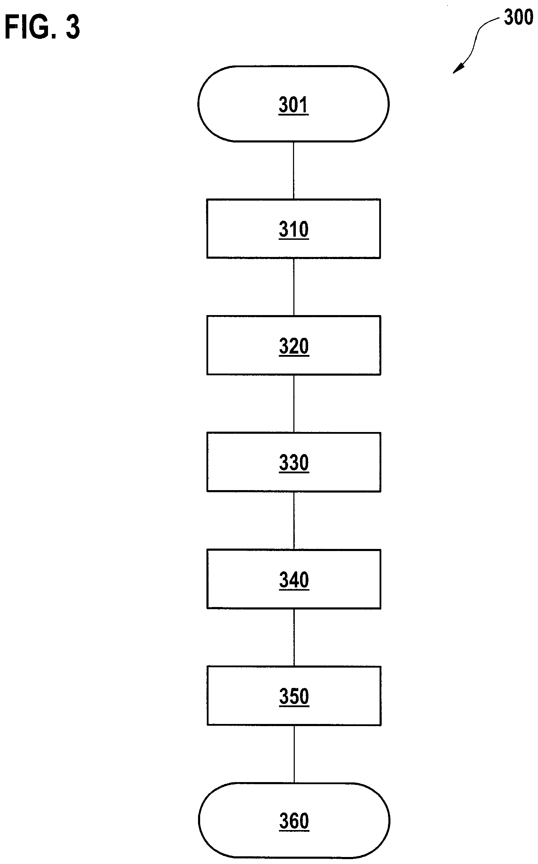

Figur 3 zeigt ein Ausführungsbeispiel des erfindungsgemäßen Verfahrens 300 zum Bestimmen 340 einer hochgenauen Position 210 und zum Betreiben 350 eines automatisierten Fahrzeugs 200.

In Schritt 301 startet das Verfahren 300.

In Schritt 310 werden Umgebungsdatenwerte erfasst, wobei die Umgebungsdatenwerte eine Umgebung 220 des automatisierten Fahrzeugs 200 repräsentieren, wobei die Umgebung 220 wenigstens zwei Umgebungsmerkmale 221, 222 umfasst.

In Schritt 320 wird ein Muster, abhängig von den wenigstens zwei Umgebungsmerkmalen 221, 222 bestimmt.

In Schritt 330 werden Kartendatenwerte eingelesen, wobei die Kartendatenwerte eine Karte repräsentieren, wobei die Karte wenigstens die Umgebung 220 des automatisierten Fahrzeugs 200 repräsentiert, wobei die Karte ein Referenzmuster umfasst.

In einer weiteren Ausführungsform wird erst der Schritt 330 und anschließend Schritt 310 und Schritt 320 ausgeführt, bevor anschließend Schritt 340 folgt.

In Schritt 340 wird die hochgenaue Position 210 des automatisierten Fahrzeugs 200, ausgehend von einem Abgleich des Musters mit dem Referenzmuster, bestimmt.

In Schritt 350 wird das automatisierte Fahrzeug 200, abhängig von der hochgenauen Position (210), betrieben.

In Schritt 360 endet das Verfahren 300.

## Patentansprüche

1. Verfahren (300) zum Bestimmen (340) einer hochgenauen Position (210) und zum Betreiben (350) eines automatisierten Fahrzeugs (200), umfassend folgende Schritte:
- Erfassen (310) von Umgebungsdatenwerten, wobei die Umgebungsdatenwerte eine Umgebung (220) des automatisierten Fahrzeugs (200) repräsentieren, wobei die Umgebung (220) wenigstens zwei Umgebungsmerkmale (221, 222) umfasst, wobei die wenigstens zwei Umgebungsmerkmale (221, 222) als Lichtquellen ausgebildet sind und das Muster bestimmt wird, indem ein Farbverlauf und/oder ein Helligkeitsverlauf der wenigstens zwei Umgebungsmerkmale (221, 222) bestimmt werden;
- Bestimmen (320) eines Musters, abhängig von den wenigstens zwei Umgebungsmerkmalen (221, 222);
- Einlesen (330) von Kartendatenwerten, wobei die Kartendatenwerte eine Karte repräsentieren, wobei die Karte wenigstens die Umgebung (220) des automatisierten Fahrzeugs (200) repräsentiert, wobei die Karte ein Referenzmuster umfasst, wobei die Karte das Referenzmuster, abhängig von einer Tageszeit und/oder abhängig von einer Jahreszeit und/oder abhängig von einer Witterung umfasst;
- Bestimmen (340) der hochgenauen Position (210) des automatisierten Fahrzeugs (200), ausgehend von einem Abgleich des Musters mit dem Referenzmuster, indem Größen wie Längen und/oder Winkel und/oder Radien mit vergleichbaren Größen des Referenzmusters verglichen werden, wobei unter einer hochgenauen Position (210) eine Position zu verstehen ist, welche innerhalb eines vorgegebenen Koordinatensystems, beispielsweise GNSS-Koordinaten, derart genau ist, dass diese Position eine maximal zulässige Unschärfe nicht überschreitet, wobei berücksichtigt wird, dass die wenigstens zwei Umgebungsmerkmale (221, 222) bei unterschiedlichen Tageszeiten und/oder unterschiedlichen Jahreszeiten und/oder unterschiedlichen Witterungen unterschiedliche Farb- und/oder Helligkeitsverläufe aufweisen; und
- Betreiben (350) des automatisierten Fahrzeugs (200), abhängig von der hochgenauen Position (210), wobei das Betreiben (350) das Bestimmen einer Trajektorie für das automatisierte Fahrzeug (200) und/oder das Abfahren der Trajektorie mittels einer automatisierten Quer- und/oder Längssteuerung umfasst.

2. Verfahren (300) nach Anspruch 1, **dadurch gekennzeichnet, dass** die Kartendatenwerte eingelesen werden, indem die Kartendatenwerte von einem externen Server (230) empfangen werden.

3. Vorrichtung (110) zum Bestimmen (340) einer hochgenauen Position (210) und zum Betreiben (350) eines automatisierten Fahrzeugs (200), umfassend Mittel, welche dazu ausgebildet sind, ein Verfahren (300) gemäß wenigstens einem der Verfahrensansprüche auszuführen.

## Claims

1. Method (300) for determining (340) a highly accurate position (210) of, and for operating (350), an automated vehicle (200), comprising the following steps:
- detecting (310) environment data values, wherein the environment data values represent an environment (220) of the automated vehicle (200), wherein the environment (220) comprises at least two environment features (221, 222), wherein the at least two environment features (221, 222) are configured as light sources and the pattern is determined by a colour profile and/or a brightness profile of the at least two environment features (221, 222) being determined;
- determining (320) a pattern, depending on the at least two environment features (221, 222);
- reading in (330) map data values, wherein the map data values represent a map, wherein the map represents at least the environment (220) of the automated vehicle (200), wherein the map comprises a reference pattern, wherein the map comprises the reference pattern depending on a time of day and/or depending on a season and/or depending on a weather situation;
- determining (340) the highly accurate position (210) of the automated vehicle (200), proceeding from a comparison of the pattern with the reference pattern by variables such as lengths and/or angles and/or radii being compared with comparable variables of the reference pattern, wherein a highly accurate position (210) should be understood to mean a position which, within a predefined coordinate system, for example GNSS coordinates, is so accurate that this position does not exceed a maximum permissible fuzziness, wherein it is taken into account that the at least two environment features (221, 222) have different colour and/or brightness profiles at different times of day and/or in different seasons and/or in different weather situations; and
- operating (350) the automated vehicle (200), depending on the highly accurate position (210), wherein the operating (350) comprises determining a trajectory for the automated vehicle (200) and/or travelling along the trajectory by means of automated lateral and/or longitudinal control.

2. Method (300) according to Claim 1, **characterized in that** the map data values are read in by the map data values being received from an external server (230).

3. Device (110) for determining (340) a highly accurate position (210) of, and for operating (350), an automated vehicle (200), comprising means configured to carry out a method (300) according to at least one of the method claims.

## Revendications

1. Procédé (300) permettant de déterminer (340) une position très précise (210) d'un véhicule automatisé (200) et d'exploiter (350) celui-ci, comprenant les étapes suivantes consistant à :
- détecter (310) des valeurs de données d'environnement, dans lequel les valeurs de données d'environnement représentent un environnement (220) du véhicule automatisé (200), dans lequel l'environnement (220) comprend au moins deux particularités d'environnement (221, 222), dans lequel lesdites au moins deux particularités d'environnement (221, 222) sont réalisées sous forme de sources de lumière, et le motif est déterminé en déterminant une courbe de couleur et/ou une courbe de luminosité desdites au moins deux particularités d'environnement (221, 222) ;
- déterminer (320) un motif en fonction desdites au moins deux particularités d'environnement (221, 222) ;
- mettre en mémoire (330) des valeurs de données cartographiques, dans lequel les valeurs de données cartographiques représentent une carte, dans lequel la carte représente au moins l'environnement (220) du véhicule automatisé (200), dans lequel la carte comprend un motif de référence, dans lequel la carte comprend le motif de référence en fonction de l'heure de la journée et/ou en fonction d'une saison et/ou en fonction des conditions météorologiques ;
- déterminer (340) la position très précise (210) du véhicule automatisé (200) en partant d'un rapprochement du motif avec le motif de référence en comparant des grandeurs comme les longueurs et/ou les angles et/ou les rayons avec des grandeurs comparables du motif de référence, dans lequel une position très précise (210) signifie une position qui, dans un système de coordonnées prédéfini, par exemple des coordonnées GNSS, est précise à tel point que cette position ne dépasse pas une imprécision admissible maximale, dans lequel on tient compte du fait que lesdites au moins deux particularités d'environnement (221, 222) présentent différentes courbes de couleur et/ou de luminosité à différentes heures de la journée et/ou à différentes saisons et/ou sous différentes conditions météorologiques ; et
- exploiter (350) le véhicule automatisé (200) en fonction de la position très précise (210), dans lequel l'exploitation (350) comprend la détermination d'une trajectoire pour le véhicule automatisé (200) et/ou le suivi de la trajectoire au moyen d'une commande transversale et/ou longitudinale automatisée.

2. Procédé (300) selon la revendication 1, **caractérisé en ce que** les valeurs de données cartographiques sont mises en mémoire **en ce que** les valeurs de données cartographiques sont reçues d'un serveur externe (230).

3. Dispositif (110) permettant de déterminer (340) une position très précise (210) d'un véhicule automatisé (200) et d'exploiter (350) celui-ci, comprenant des moyens qui sont réalisés pour exécuter un procédé (300) selon au moins l'une des revendications de procédé.
